# EUROPEAN PATENT SPECIFICATION

(11) **EP 2 448 364 B1**
(45) Date of publication and mention of the grant of the patent: **08.04.2015**
(21) Application number: 09847256.6
(22) Date of filing: 10.12.2009
(51) Int. Cl.: H04W 80/00, H04L 12/18, H04W 76/00, H04N 7/14, H04N 7/15, H04L 29/06

(54) **METHOD FOR REALIZING RADIO VIDEOCONFERENCE, SYSTEM AND TERMINAL THEREOF**
VERFAHREN ZUR DURCHFÜHRUNG EINER VIDEOKONFERENZ ÜBER FUNK, SYSTEM UND ENDGERÄT DAFÜR
PROCEDE POUR LA REALISATION DE VISIOCONFERENCE SUR RADIO, SYSTEME ET TERMINAL CORRESPONDANTS

(30) Priority: 16.07.2009 CN 200910089390
(43) Date of publication of application: 02.05.2012
(73) Proprietor: ZTE Corporation, Shenzhen, Guangdong 518057 (CN)
(72) Inventor: LI, Jichao, Shenzhen Guangdong 518057 (CN); LING, Yong, Shenzhen Guangdong 518057 (CN); ZENG, Zhenzhuo, Shenzhen Guangdong 518057 (CN)
(74) Representative: Lambert, Ian Robert
(86) International application number: PCT/CN2009/075449
(87) International publication number: WO 2011/006331

(56) References cited:
- CN-A- 1 976 434
- CN-A- 101 102 145
- CN-A- 101 287 094
- CN-A- 101 610 382
- US-A1- 2005 073 964
- US-A1- 2007 172 045
- US-A1- 2007 172 045
- US-A1- 2008 235 362

## Description

### TECHNICAL FIELD

The disclosure relates to the technology of wireless video conference, in particular to a method, a system and a terminal for implementing a wireless video conference.

### BACKGROUND

With the rapid development of computers and wireless network technology, conventional wireless communication modes such as telephones, faxes and the like cannot meet ever-growing communication needs of today because of the incapability of achieving a face-to-face communication effect, while an ever-growing wireless network environment makes the wireless transmission of video and audio possible, and a prominent application is a remote wireless video conference.

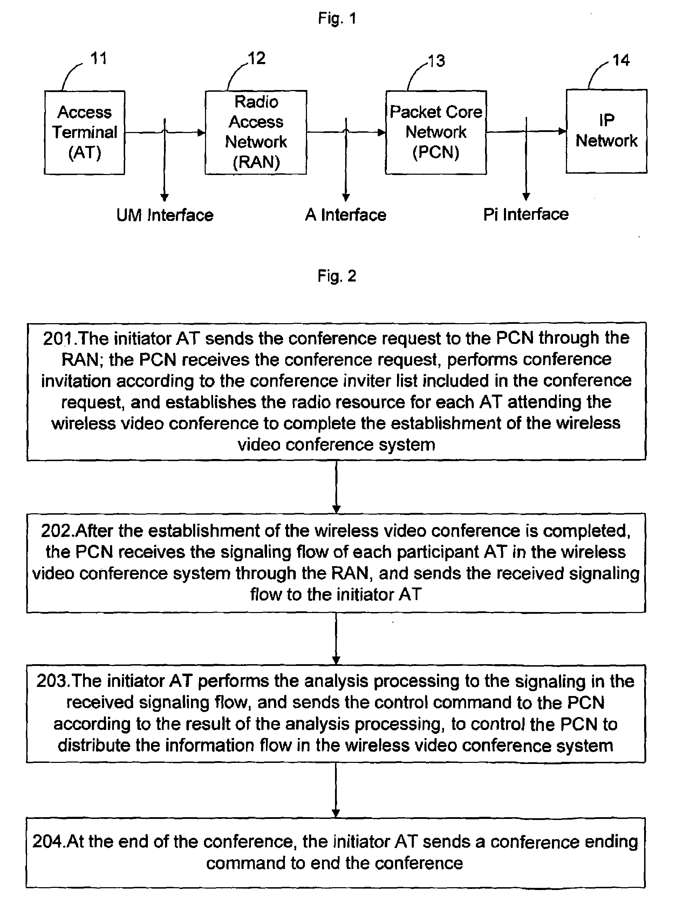

With the wide commercialization of wireless broadband network, a highspeed data transmission link of the wireless broadband network has guaranteed the heavy traffic information transmission, so that a wireless video function is widely applied. The structure of the wireless broadband network is shown as Fig. 1, in which data communication between a Wireless Access Terminal (AT) 11 and a Radio Access Network (RAN) 12 is performed via an air interface (UM interface). The AT 11 is provided with video and audio acquisition equipment such as a camera, a microphone and the like; the RAN 12 is connected with a Packet Core Network (PCN) 13 via an interface A; the PCN 13 is connected with an external Internet Protocol (IP) network 14 such as the Internet via a parallel interconnection interface (Pi interface) which follows the IS-835 standard.

It can be seen that the AT has the function of acquiring video and audio data, and the AT is connected to the PCN by accessing into the RAN, so as to access to a wireless broadband network system. However, in the AT and the accessed wireless broadband network system, there is a lack of the control of the information stream among multiple ATs at present, including the control of an audio and/or video stream, the control of a data stream and the like. Moreover, the prior art which only provide a two-party video call cannot provide a multi-party video call function, therefore cannot provide a multi-party wireless video conference function.

US 2008/235362A1 discloses a method in a mobile communication device for communication over a wireless network for managing conference equipment, including: establishing a connection with a video conferencing management server via the wireless network; receiving information from the video conferencing management server, the information including one or more lists of entries from one or more phone books or personal information of a user of the mobile device; generating a user interface to allow the user to select one or more of the entries from the one or more phone books or personal information; and creating a control message, based on at least a selected one or more of the entries from the one or more phone books or personal information, that instructs the video conferencing management server to initiate or schedule a videoconference.

US 2007/172045A1 discloses a system for establishing a conference call, which includes a handset operable to send a message containing a list of prospective participants for the conference call. The system also includes an application server operable to receive the message and invite at least some of the prospective participants, the application server is further operable, in response to receiving an acknowledgement from at least one of the prospective participants to participate in the conference call, to include the at least one of the prospective participants in the conference call.

CN 101102145A discloses a kind of multi-side meeting system and method initiated by moving terminal, using for initiating multi-side meeting with some communication terminals by moving terminal, comprising: setting group claim to initiate multi-side meeting in moving terminal, and the said group claim relating to the number of moving terminal for attending the multi-side meeting, and the said moving terminal sends group claim to meeting machine through cellular mobile network and IP net, and the meeting machine resolves the said group claim to get the said number of moving terminal for attending the multi-side meeting. And the meeting machine orders sound/ data net to send call to the said communication terminals for attending the multi-side meeting, and the communication terminals will answer the call send by sound/ data net.

US 2005/073964A1 discloses a method and system for fast setup of group Voice over Internet Protocol (VoIP) communications, which provide a lower VoIP signaling overhead and a faster setup-time of group calls such as N-way audio and/or audio-video conference calls. Multi-party VoIP connections are quickly set-up over one or more virtual communications channels established between plural network devices using a session layer application, one or more group transport layer ports and a broadcast destination network address.

CN 1976434A discloses a method for realizing on-line video conference includes connecting demand communication server to video conference server, setting up conference in demand communication server by user, starting up video conference and sending out conference invitations by demand communication server, participating conference by user in mode of calling conference number at browser through demand communication server. The system used for realizing said method is also disclosed.

CN 101287094A discloses a realization method of the media operation of a multi-media conference and a system thereof, comprises: a network side receives media use request message sent by the terminal of conference members; the network side sends the media use request message to a host terminal which then sends response message to the network side; after receiving the response message, the network side judges whether the media use request obtains the permission of the host terminal or not according to the response message; if the answer is yes, media channel parameters corresponding to the media of the media use request message are set, and the media channel is opened.

### SUMMARY

The main object of the disclosure is to provide a method, a system and a terminal for implementing a wireless video conference to realize a multi-party wireless video conference.

In order to achieve the object, the technical solution of the disclosure is provides as follows.

The disclosure provides a method for implementing the wireless video conference, comprising that:
an initiator AT initiates a conference request to a PCN; and the PCN performs conference invitation according to a conference inviter list included in the received conference request, establishes a radio resource and performs initialization for each AT which attends the wireless video conference, and sends the information of conference members attending the wireless video conference to the initiator AT for storing to complete the establishment of a wireless video conference system;
after the wireless video conference system is established successfully, the PCN receives a signalling flow of the AT in the wireless video conference system and sends the received signalling flow to the initiator AT; and the initiator AT sends a control command to the PCN according to a signalling in the received signalling flow to control the PCN to distribute an information flow in the wireless video conference system,
the step of establishing the radio resource and performing initialization for each AT which attends the wireless video conference comprises that: after the PCN receives the conference request, authenticates and authorizes the initiator AT successfully, the PCN establishes the radio resource for the initiator AT, sends point to point protocol (PPP) initialization information to the initiator AT, and assigns an IP address to the initiator AT; when receiving a conference participation command returned by an participant AT, the PCN establishes a radio resource for the participant AT, sends the PPP initialization information to the participant AT, and assigns an IP address for the participant AT.

Preferably, the conference request comprises: a conference inviter list, the high-priority authority of the initiator AT and the authority distributed to the AT in the conference inviter list.

Preferably, the conference member information comprises: a conference member list, a high-priority authority of the initiator AT, the authority of the participant AT which attends the wireless video conference and the IP addresses of all ATs.

Preferably, the step of receiving the signalling flow of the AT in the wireless video conference system by the PCN comprises that: the PCN receives the signalling flow of the participant AT and the initiator AT through a RAN, wherein the signalling flow comprises: a presentation request command, a video request command and a data sharing request command.

Preferably, the step of sending the control command to the PCN by the initiator AT according to the signalling in the received signalling flow comprises that: the initiator AT receives the signalling flow from the PCN, performs analysis processing to the signalling in the signalling flow, and sends the control command to the PCN according to the result of the analysis processing.

Preferably, the step of controlling the PCN to distribute the information flow in the wireless video conference system comprises that: the PCN receives and sends an audio and/or video flow of the AT which sends the presentation request according to a presentation permission command of the initiator AT; and/or, the PCN distributes a data flow according to the data sharing command of the initiator AT; and/or, the PCN distributes the video flow according to a video distribution command of the initiator AT; and/or, the PCN releases all UM interface radio resources according a conference ending command of the initiator AT.

The disclosure also provides a system for implementing the wireless video conference. The system comprises:
an initiator AT configured for initiating the conference request, sending and receiving the signalling flow and the information flow, performing the analysis processing to the signalling in the received signalling flow, and sending a control command to control the PCN to distribute the information flow in the wireless video conference system;
a participant AT configured for attending the wireless video conference, sending and receiving the signalling flow and the information flow, and processing the received information flow; and
a PCN configured for performing conference invitation according to the conference inviter list included in the received conference request, establishing the radio resource and performing initialization for each AT which attends the wireless video conference; simultaneously the PCN configured for receiving and sending the information flow and the information flow of each AT, and distributing the information flow according to the control command of the initiator AT,
the PCN is further configured to establish the radio resource for the initiator AT, after the PCN receives the conference request, and authenticates and authorizes the initiator AT successfully; send Point To Point Protocol, PPP, initialization information to the initiator AT, and assign an Internet Protocol, IP, address to the initiator AT; establish a radio resource for an participant AT, after the PCN receives a conference participation command returned by the participant AT, send the PPP initialization information to the participant AT, and assign an IP address for the participant AT.

Preferably, the system further comprises the RAN configured for transferring the signalling flow and the information flow in the system.

Preferably, the initiator AT further comprises:
a first information processing module configured for sending and receiving the signalling flow and the information flow through the RAN;
a terminal control module configured for processing the signalling flow and the information flow received through the RAN, and sending a control command for controlling the PCN to distribute the information flow through the RAN;
a first audio and video module configured for converting the audio and/or video flow, distributed by the PCN, received by the first information processing module into voice and/or video;

Preferably, the initiator AT further comprises:
a first audio and video acquisition module configured for acquiring the audio and/or video data of the initiator AT and sending the audio and/or video flow to the PCN under the calling of the first information processing module;
a first data storage module configured for sending the stored data of the initiator AT to the PCN through the RAN under the calling of the first information processing module, or storing the data flow, distributed by the PCN, received by the first information processing module.

Preferably, the participant AT further comprises:
a second information processing module configured for sending and receiving the signalling flow and the information flow through the RAN;
a second audio and video module configured for converting the audio and/or video flow, distributed by the PCN, received by the second information processing module, into voice and/or video.

Preferably, the participant AT also comprises:
a second audio and video acquisition module configured for acquiring the audio and video data of the participant AT and sending the audio and/or video flow to the PCN under the calling of the second information processing module;
a second data storage module configured for sending the stored data of the participant AT to the PCN through the RAN, or storing the data flow, distributed by the PCN, received by the second information processing module under the calling of the second information processing module.

The disclosure also provides the AT, comprising:
an information processing module configured for sending and receiving the signalling flow and the information flow;
a terminal control module configured for sending the control command for controlling the PCN to distribute the information flow and processing the received signalling flow and the information flow when the AT serves as the initiator AT;
an audio and video module configured for converting the audio and/or video flow, distributed by the PCN, received by the information processing module into the voice and/or video,
the information processing module is further configured to send a conference request command to the PCN through an RAN when the wireless video conference system is being established; and receive an Point To Point Protocol, PPP, initialization information sent by the PCN and the IP address assigned by the PCN through the RAN after being authenticated and authorized by the PCN successfully, when the AT serves as an initiator AT; and
the information processing module is further configured to receive an conference invitation information through the RAN, and return a participation or nonparticipation command, when the wireless video conference system is being established; and receive the PPP initialization information sent by the PCN through the RAN and the IP address assigned by the PCN when the AT serves as a participant AT.

Preferably, the AT further comprises:
an audio and video acquisition module configured for acquiring the audio and/or video data of the AT and sending the audio and/or video flow to the PCN under the calling of the information processing module;
a data storage module configured for sending the stored data of the AT to the PCN through the RAN under the calling of the information processing module, or storing the data flow, distributed by the PCN, received by the information processing module.

The method, the system and the terminal for implementing the wireless video conference provided by the disclosure realize the multi-party wireless video conference by sending the signalling in the wireless video conference system to the initiator AT, generating the control command by the initiator AT according to the received signalling, sending the control command to the PCN, and distributing the information flow in the wireless video conference system by the PCN according to the control command, so that each AT in the wireless video conference system could obtain required information flow by sending the signalling.

In addition, the establishment of the overall wireless video conference system and the distribution of the information flow in the implementation process of the wireless video conference are controlled by the initiator AT, so that the multi-party wireless video conference is realized and simultaneously uniform wireless video conference control is ensured; therefore, the implementation of the wireless video conference is safer, more reliable and more effective.

### BRIEF DESCRIPTION OF THE DRAWINGS

Fig.1 shows a diagram of wireless broadband system network architecture;
Fig.2 shows a flowchart of the method for implementing the wireless video conference of the disclosure;
Fig.3 shows a structural diagram of the system for implementing the wireless video conference of the disclosure; and
Fig.4 shows a structural diagram of an AT provided by the disclosure.

### DETAILED DESCRIPTION

The basic idea of the disclosure is that: the initiator AT serves as an information flow control party, generates the control command, and sends the control command to the PCN; and the PCN completes distributing the information flow in the wireless video conference system according to the control command.

The disclosure is detailed below in conjunction with the accompanying drawings and specific embodiments.

The method for implementing the wireless video conference of the disclosure is shown as the Fig. 2, which comprises the following steps:
Step 201: the initiator AT sends the conference request to the PCN through the RAN; the PCN receives the conference request, performs conference invitation according to the conference inviter list included in the conference request, and establishes the radio resource for each AT attending the wireless video conference to complete the establishment of the wireless video conference system;
usually, aiming at a certain wireless video conference, a certain AT among multiple ATs connected with the RAN via the UM interface can serve as the initiator AT. Step 201 is as follows specifically: the initiator AT sends the conference request to the PCN through the RAN, wherein the conference request comprises a conference inviter list, high-priority authority of the initiator AT, the authority distributed to the AT in the conference inviter list and the like; the RAN receives the conference request and forwards the conference request to the PCN; after receiving the conference request, the PCN authenticates and authorizes the initiator AT; after a successful authentication and authorization, the PCN establishes the radio resource for the initiator AT, sends PPP initialization information to the initiator AT, and assigns an IP address to the initiator AT; simultaneously, the PCN sends the conference invitation through the RAN according to the conference inviter list in the conference request; and the AT which receives the conference invitation returns a participation or nonparticipation conference command;
when receiving the participation conference command, the PCN establishes the radio resource for the participant AT, sends the PPP initialization information and assigns the IP address; after the radio resource of all participant ATs is successfully established, the PCN sends the conference member information to the initiator AT through the RAN for storing, wherein the conference member information comprises a conference member list, the high-priority authority of the initiator AT, the authority of the participant AT, the IP addresses of all ATs and the like; and the establishment of the wireless video conference system is completed.

In the step, performing the conference invitation comprises that: the PCN sends a conference invitation message to each AT in the conference inviter list.

Step 202: after the establishment of the wireless video conference is completed, the PCN receives the signaling flow of each participant AT in the wireless video conference system through the RAN, and sends the received signaling flow to the initiator AT;
specifically, after the successful establishment of the wireless video conference system, the PCN receives the signaling flow of the participant AT and the initiator AT through the RAN, wherein the signaling flow comprises the presentation request command, the video request command, the data sharing request command and the like; and the PCN sends the received signaling flow to the initiator AT.

Step 203: the initiator AT performs the analysis processing to the signaling in the received signaling flow, and sends the control command to the PCN according to the result of the analysis processing, to control the PCN to distribute the information flow in the wireless video conference system;
specifically, the initiator AT receives the signalling flow from the PCN, performs the analysis processing to the signalling in the signalling flow, determines whether the AT which sends the signalling meets the legality and the authority of the conference member information stored in the current wireless video conference system according to the result of the analysis, generates the control command according to the analyzed signalling content when the AT which sends the signalling meets the legality and the authority of the conference member information stored in the current wireless video conference system, and sends the control command to the PCN; the PCN receives the control command and distributes the information flow in the wireless video conference system according to the control command.

Wherein, the analysis processing comprises: analyzing the information of the AT which sends the signalling, the content of the signalling and the like; the control command comprises: the presentation permission command including a receiver list, the audio and/or video distribution command for controlling the PCN to distribute the audio and/or video flow, the data sharing command for controlling the PCN to distribute the data flow, and the like.

Specifically, generating the control command according to the analyzed signalling content comprises: when the analyzed signalling content is a presentation request, generating the presentation permission command which includes the receiver list; when the analyzed signalling content is a data sharing request, generating the data sharing command; and when the analyzed signalling content is a video request, generating the AT number which including the sending video request command, the video distribution command of the AT number which is requested for a video and the like.

Controlling the PCN to distribute the information flow in the wireless video conference system comprises: the PCN receiving and sending the audio and/or video flow of the AT, which sends the presentation request, according to the presentation permission command of the initiator AT; and/or the PCN distributing the data flow according to the data sharing command of the initiator AT; and/or the PCN distributing the video flow according to the video distribution command of the initiator AT; and/or the PCN notifying the RAN to release all the UM interface radio resources according to the conference ending command of the initiator AT.

Here, the processing for determining whether the AT which sends the signalling has the legality and the authority belongs to prior art, so no further description is needed here.

Several examples are introduced below to describe in detail that the initiator AT receives the signalling and generates the control command so as to control the PCN to distribute the information flow.

For example, when receiving the presentation request command sent by the PCN through the RAN, the initiator AT performs the analysis processing to the presentation request command, wherein the presentation request command comprises: the information of the AT which sends the request, the presentation request and the like; when the AT which sends the request meets the legality and the authority of the conference member information stored in the wireless video conference system, the initiator AT separates, from the stored conference member list, the receiver list of the AT which receives the audio and/or video flow of the AT which sends the presentation request, and sends the presentation permission command including the receiver list to the PCN; after receiving the presentation permission command, the PCN notifies the AT which sends the presentation request to send the audio and/or video flow, and forwards the audio and/or video flow of the AT which sends the presentation request according to the receiver list; the AT which sends the presentation request serves as a presenter to make a presentation; the presenter receives the audio and/or video flow by default, which is distributed by the PCN, of the initiator; if the presenter is the initiator AT, the PCN sends the received audio and/or video flow of the participant AT, which accesses into the wireless audio conference system most rapidly, to the presenter;
for another example, when receiving the data sharing request command sent by the PCN through the RAN, the initiator AT performs the analysis processing to the data sharing request command, wherein the data sharing request command comprises: the information of the AT which sends the request, the data sharing request and the like; when the AT which sends the sharing request command meets the legality and the authority of the conference member information stored in the wireless video conference system, the initiator AT sends the data sharing command which includes the conference member list to the PCN; according to the data sharing command, the PCN notifies the AT which sends the data sharing request command to send the data flow, and distributes the data flow according to the member list of the wireless video conference system;
and for another example, when receiving the video request command sent by the PCN through the RAN, the initiator AT performs the analysis processing to the video sending request command, wherein the video request command comprises: the information of the AT which sends the request, the information of the AT which is requested, the video request and the like; when the AT which sends the video request command meets the legality and the authority of the conference member information stored in the wireless video conference system, the initiator AT sends the video distribution command to the PCN, wherein the video distribution command includes the number of the AT which sends the video request command and the number of the AT which is requested for video; according to the video distribution command, the PCN notifies the AT which is requested for video to send the video flow to the AT which sends the video request command;
in the above examples, the signalling flow and the information flow can also be sent between two PCNs which are far away from each other through an IP network; and the initiator AT intensively controls the PCN to distribute the information flow in the wireless video conference system.

Step 204: at the end of the conference, the initiator AT sends a conference ending command to end the conference;
at the end of the conference, the initiator AT sends the conference ending command, which includes the conference member list, to the PCN through the RAN ; the PCN releases all UM interface radio resources according to the conference member list in the conference ending command; the initiator AT clears all stored information of the conference; and the wireless video conference ends.

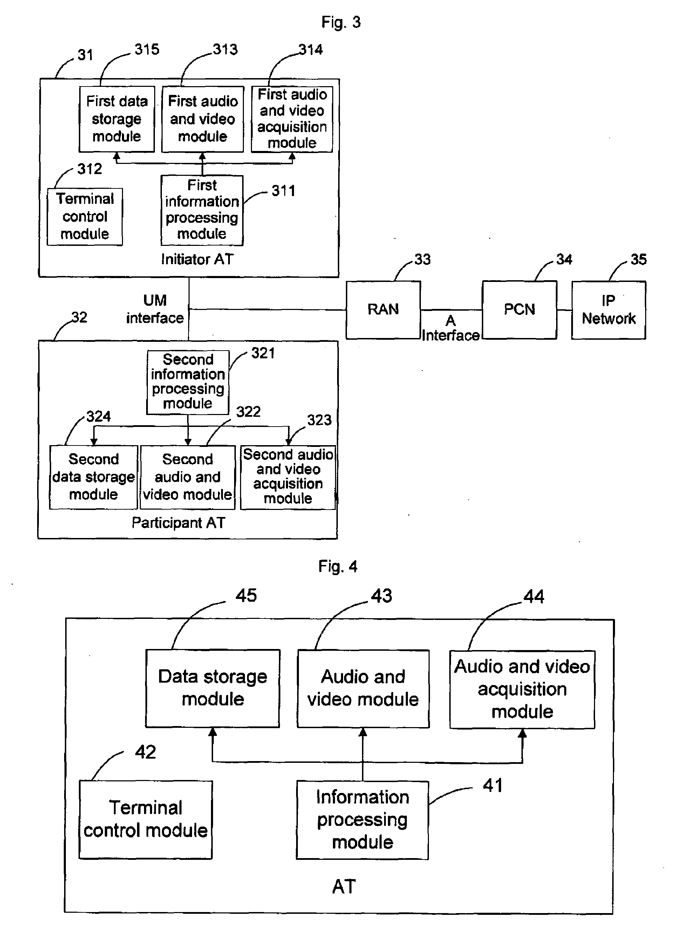

In order to implement the above method, the disclosure also provides the system for implementing the wireless video conference, as shown in Fig. 3, wherein the system comprises: an initiator AT 31, a participant AT 32 and a PCN.

The initiator AT 31 is configured for initiating the establishment of the wireless video conference system, sending and receiving the signalling flow and the information flow, performing analysis processing to the signalling in the received signalling flow, sending the control command, and controlling the PCN 34 to distribute the information flow in the wireless video conference system.

Preferably, the initiator AT 31 comprises: a first information processing module 311, a terminal control module 312 and a first audio and video module 313;
the first information processing module 311 is configured for sending and receiving the signalling flow and the information flow through the RAN 33; specifically, when the wireless video conference system is being established, the first information processing module 311 sends a conference request command to the PCN through the RAN 33, and receives the PPP initialization information sent by the PCN 34 and the IP address assigned by the PCN 34 through the RAN 33; after the successful establishment of the wireless video conference system, the first information processing module 311 sends the presentation request command, the data sharing request command and the video request command, and sends and receives the audio and/or video flow, data flow and the like;
the terminal control module 312 is configured for processing the signalling flow and the information flow which are received through the RAN 33, and sending through the RAN 33 the control command which controls the PCN 34 to distribute the information flow,
specifically, when the wireless video conference system is being established, the terminal control module 312 receives and stores the conference member information sent by the PCN 34 through the RAN 33; after the successful establishment of the wireless video conference system, the terminal control module 312 receives the signalling flow of the participant AT 32 sent by the PCN 34 through the RAN 33 and performs the analysis processing; the signalling flow comprises the presentation request command, the data sharing request command, the audio and/or video request command and the like, and the analysis processing comprises: authenticating the legality and the authority of the analyzed AT which sends the request, and obtaining the request information in the signalling flow and the like;
and according to the result of the analysis processing, the terminal control module 312 sends the control command to the PCN 34 through the RAN 33; the control command comprises the presentation permission command including the receiver list, the audio and/or video distribution command for controlling the PCN 34 to distribute the audio and/or video flow, the data sharing command for controlling the PCN 34 to distribute the data flow, the conference ending command for controlling to end the conference and the like.

The first audio and video module 313 is configured for converting the audio and/or video flow, distributed by the PCN 34, received by the first information processing module 311 into voice and/or video.

Preferably, the initiator AT 31 further comprises: a first audio and video acquisition module 314 and a first data storage module 315.

The first audio and video acquisition module 314 is configured for acquiring the audio and/or video data of the initiator AT 31 and sending the audio and/or video flow to the PCN 34 under the calling of the first information processing module 311;
specifically, after receiving the audio and/or video distribution command of the initiator AT 31, the PCN 34 notifies the first information processing module 311 of the initiator AT 31 to call the first audio and/or video acquisition module 314 to send the audio and/or video flow to the PCN 34.

The first data storage module 315 is configured for sending the stored data of the initiator AT 31 to the PCN 34 through the RAN 33 under the calling of the first information processing module 311, or storing the data flow, distributed by the PCN 34, received by the first information processing module 311;
specifically, after receiving the data sharing command of the initiator AT, the PCN 34 notifies the first information processing module 311 of the initiator AT to call the first data storage module 315 to send the stored data of the initiator AT to the PCN 34 through the RAN 33, or stores the data flow, distributed by the PCN 34, received by the first information processing module 311.

There may be multiple participant ATs 32 which are configured for attending the wireless video conference, sending and receiving the signalling flow and the information flow, and processing the received information flow.

The participant AT 32 further comprises a second information processing module 321 and a second audio and video module 322.

The second information processing module 321 is configured for sending and receiving the signalling flow and the information flow through the RAN 33; specifically, when the wireless video conference system is being established, the second information processing module 321 is configured for: receiving the conference invitation information through the RAN 33, and returning a participation or nonparticipation command; receiving the PPP initialization information sent by the PCN 34 through the RAN 33 and the IP address assigned by the PCN 34; after the wireless video conference system is established successfully, sending the presentation request command, the data sharing request command and the video request command, and sending and receiving the audio and/or video flow, the data flow and the like.

The second audio and video module 322 is configured for converting the audio and/or video flow, distributed by the PCN 34, received by the second information processing module 321 into the audio and/or video.

Preferably, the participant AT 32 further comprises a second audio and video acquisition module 323 and a second data storage module 324.

The second audio and video acquisition module 323 is configured for acquiring the audio and/or video data of the participant AT 32, and sending the audio and/or video flow to the PCN 34 under the calling of the second information processing module 321;
specifically, after receiving the audio and/or video distribution command for the participant AT 32, the PCN 34 notifies the second information processing module 321 of the participant AT 32 to call the second audio and video acquisition module 323 to send the audio and/or video flow to the PCN 34.

The second data storage module 324 is configured for sending the stored data of the participant AT 32 to the PCN 34 through the RAN 33 under the calling of the second information processing module 321, or storing the data flow, distributed by the PCN 34, received by the second information processing module 321;
after receiving the data sharing command for the participant AT 32, the PCN 34 notifies the second information processing module 321 of the participant AT 32 to call the second data storage module 324 to send the stored data of the participant AT 32 to the PCN 34 through the RAN 33, or stores the data flow, distributed by the PCN 34, received by the second information processing module 321.

The PCN 34 is configured for receiving and sending the signalling flow and the information flow of the each AT, and distributing the information flow according to the control command of the initiator AT 31;
specifically, when the wireless video conference system is being established, the PCN 34 is configured for: receiving the conference request command of the initiator AT 31 through the RAN 33, authenticating and authorizing the initiator AT 31, establishing the radio resource and performing initialization; and sending the conference invitation according to the conference inviter list in the received conference request command, receiving the participation conference command of the participant AT 32, establishing the radio resource for the participant AT and initializing the participant AT, and sending the conference member list and the IP address information to the initiator AT 31;
after the wireless video conference system is established successfully, the PCN 34 is configured for: receiving the signalling flow sent by the AT through the RAN 33 in the wireless video conference system, sending the signalling flow to the initiator AT 31, receiving the control command of the initiator AT 31, and distributing the information flow among the ATs according to the control command of the initiator AT 31; the distributing includes:
the PCN 34 receiving and sending the audio and/or video flow of the AT which sends the presentation request according to the presentation permission command of the initiator AT 31; the PCN 34 distributing the data flow according to the data sharing command of the initiator AT 31; the PCN 34 distributing the video flow according to the video distribution command of the initiator AT 31; and the PCN 34 releases all UM interface radio resources according to the conference ending command of the initiator AT 31.

The device further comprises:
the RAN 33 configured for transferring the signalling flow and the information flow in the system;
an IP network 35 configured for realizing the connection of a wireless network and a wired network, and sending the signalling flow and the information flow in the wireless video conference between two PCNs which are far away from each other.
It should be understood that in practical application, any AT can serve as the initiator AT or serve as the participant AT.

Based on the above system, the AT of the disclosure, as shown in Fig. 4, comprises: an information processing module 41, a terminal control module 42 and an audio and video module 43.

The information processing module 41 is configured for sending and receiving the signalling flow and the information flow;
specifically, when the AT serves as the initiator AT and the wireless video conference system is being established, the initiator AT sends the conference request command to the PCN through the RAN, receives the PPP initialization information sent by the PCN and the IP address assigned by the PCN through the RAN; after the wireless video conference system is established successfully, the initiator AT sends the presentation request command, the data sharing request command and the video request command, and sends and receives the audio and/or video flow, the data flow and the like; when the AT serves as the participant AT and the wireless video conference system is being established, the participant AT receives the conference invitation information through the RAN, returns participation or nonparticipation command, receives the PPP initialization information sent by the PCN through the RAN and the IP address assigned through the PCN; after the wireless video conference system is established successfully, the participant AT sends the presentation request command, the data sharing request command and the video request command, and sends and receives the audio and/or video flow, the data flow and the like.

The terminal control module 42 is configured for sending through the RAN the control command which controls the PCN to distribute the information flow and processing the signalling flow and the information flow received through the RAN, when the AT serves as the initiator AT; and the terminal control module 42 does not operate when the AT serves as the participant AT.

Specially, when the AT serves as the initiator AT and the wireless video conference system is being established, the terminal control module 42 receives and stores the conference member information sent by the PCN through the RAN; after the wireless video conference system is established successfully, the terminal control module 42 is configured for receiving the signalling flow of the participant AT, which is sent by the PCN through the RNA, and performing analysis processing, wherein the signalling flow comprises a presentation request command, the data sharing request command, the audio and/or video request command and the like, and the analysis processing comprises: authenticating the legality and the authority of the analyzed AT which sends the request, and obtaining the request information thereof and the like;

According to the result of the analysis processing, the terminal control module 42 sends the control command to the PCN through the RAN. The control command comprises: the presentation permission command including the receiver list, the audio and/or video distribution command for controlling the PCN to distribute the audio and/or video flow, the data sharing command for controlling the PCN to distribute the data flow, the conference ending command for controlling the conference to end and the like.
when the AT serves as the participant AT, the terminal control module 42 does not operate.

The audio and video module 43 is configured for converting the audio and/or video flow, distributed by the PCN, received by the information processing module into the audio and/or video.

Preferably, the AT further comprises: an audio and video acquisition module 44 and a data storage module 45.

The audio and video acquisition module 44 is configured for acquiring the audio and/or video data of the AT and sending the audio and/or video flow to the PCN under the calling of the information processing module 41.

The data storage module 45 is configured for sending the stored data of the AT to the PCN through the RAN, or storing the data flow, distributed by the PCN, received by the information processing module 41 under the calling of the information processing module 41.

## Claims

1. A method for implementing a wireless video conference, comprising:
initiating (201), by an initiator Wireless Access Terminal, AT, a conference request to a Packet Core Network, PCN; performing, by the PCN, a conference invitation according to a conference inviter list included in the conference request, establishing a radio resource and performing initialization for each AT which attends the wireless video conference, and sending information of conference members attending the wireless video conference to the initiator AT for storing to complete an establishment of a wireless video conference system;
receiving (202), by the PCN, a signalling flow of the AT in the wireless video conference system, after the wireless video conference system is established successfully, and sending the signalling flow to the initiator AT; and
sending (203), by the initiator AT, a control command to the PCN, according to a signalling in the signalling flow, to control the PCN to distribute an information flow in the wireless video conference system,
**characterized in that**, wherein the step of establishing the radio resource and performing initialization for each AT which attends the wireless video conference comprises:
establishing, by the PCN, the radio resource for the initiator AT, after the PCN receives the conference request, and authenticates and authorizes the initiator AT successfully, sending Point To Point Protocol, PPP, initialization information to the initiator AT, and assigning an internet Protocol, IP, address to the initiator AT; establishing, by the PCN, a radio resource for an participant AT, after the PCN receives a conference participation command returned by the participant AT, sending the PPP initialization information to the participant AT, and assigning an IP address for the participant AT.

2. The method according to claim 1, wherein the conference request comprises: a conference inviter list, a high-priority authority of the initiator AT, and the authority assigned to the AT in the conference inviter list.

3. The method according to claim 1, wherein the conference member information comprises: a conference member list, a high-priority authority of the initiator AT, an authority of the participant AT attending the wireless video conference, and IP addresses of all ATs.

4. The method according to claim 1, wherein the step of receiving the signalling flow of the AT in the wireless video conference system by the PCN comprises: receiving, by the PCN, the signalling flow of the participant AT and the initiator AT through a Radio Access Network, RAN;
wherein the signalling flow comprises: a presentation request command, a video request command and a data sharing request command.

5. The method according to claim 1, wherein the step of sending the control command to the PCN by the initiator AT according to the signalling in the received signalling flow comprises: receiving, by the initiator AT, the signalling flow from the PCN, performing analysis processing to the signalling in the signalling flow, and sending the control command to the PCN according to a result of the analysis processing.

6. The method according to claim 1, wherein the step of controlling the PCN to distribute the information flow in the wireless video conference system comprises:
receiving and distributing, by the PCN, an audio and/or video flow of the AT which sends the presentation request, according to a presentation permission command of the initiator AT; and/or, distributing, by the PCN, a data flow according to the data sharing command of the initiator AT; and/or,
distributing, by the PCN, a video flow according to a video distribution command of the initiator AT; and/or, releasing, by the PCN, all UM interface radio resources according a conference ending command of the initiator AT.

7. A system for implementing a wireless video conference, comprising:
an initiator AT (31) configured to initiate a conference request, send and receive a signalling flow and a information flow, perform an analysis processing to a signalling in the received signalling flow, and send a control command to control a PCN to distribute an information flow in the wireless video conference system;
a participant AT (32) configured to attend the wireless video conference, send and receive the signalling flow and the information flow, and process the information flow;
a PCN (34) configured to perform conference invitation according to a conference inviter list included in the conference request, establish radio resource and perform initialization for each AT which attends the wireless video conference; and to receive and send a information flow and a information flow of each AT, and distribute the information flow according to the control command of the initiator AT,
**characterized in that**, wherein the PCN is further configured to establish the radio resource for the initiator AT, after the PCN receives the conference request, and authenticates and authorizes the initiator AT successfully; send Point To Point Protocol, PPP, initialization information to the initiator AT, and assign an Internet Protocol, IP, address to the initiator AT; establish a radio resource for an participant AT, after the PCN receives a conference participation command returned by the participant AT, send the PPP initialization information to the participant AT, and assign an IP address for the participant AT.

8. The system according to claim 7, further comprising:
a RAN configured to transfer the signalling flow and the information flow in the system.

9. The system according to claim 8, wherein the initiator AT comprises:
a first information processing module (311) configured to send and receive the signalling flow and the information flow through the RAN;
a terminal control module (312) configured to process the signalling flow and the information flow received through the RAN, and send a control command for controlling the PCN to distribute the information flow through the RAN;
a first audio and video module (313) configured to convert the audio and/or video flow, distributed by the PCN, received by the first information processing module into voice and/or video;
a first audio and video acquisition module (314) configured to acquire an audio and/or video data of the initiator AT and send an audio and/or video flow to the PCN under the calling of the first information processing module; and
a first data storage module (315) configured to send a stored data of the initiator AT to the PCN through the RAN under the calling of the first information processing module, or store the data flow, distributed by the PCN, received by the first information processing module.

10. The system according to claim 9, wherein the participant AT comprises:
a second information processing module (321) configured to send and receive the signalling flow and the information flow through the RAN; and
a second audio and video module (322) configured to convert the audio and/or video flow, distributed by the PCN, received by the second information processing module into voice and/or video.

11. The system according to claim 9, wherein the participant AT further comprises:
a second audio and video acquisition module (323) configured to acquire the audio and video data of the participant AT, and send the audio and video flow to the PCN under the calling of the second information processing module; and
a second data storage module (324) configured to send the stored data of the participant AT to the PCN through the RAN, or store the data flow, distributed by the PCN, received by the second information processing module under the calling of the second information processing module.

12. An Access terminal, AT, comprising:
an information processing module (41) configured to send and receive a signalling flow and an information flow;
a terminal control module (42) configured to send a control command for controlling the PCN to distribute the information flow, and process the received signalling flow and the information flow when the AT serves as an initiator AT; and
an audio and video module (43) configured to convert an audio and/or video flow, distributed by the PCN, received by the information processing module into the voice and/or video,
**characterized in that**, wherein the information processing module is further configured to send a conference request command to the PCN through an RAN when the wireless video conference system is being established; and receive an Point To Point Protocol, PPP, initialization information sent by the PCN and the IP address assigned by the PCN through the RAN after being authenticated and authorized by the PCN successfully, when the AT serves as an initiator AT; and
the information processing module is further configured to receive an conference invitation information through the RAN, and return a participation or nonparticipation command, when the wireless video conference system is being established; and receive the PPP Initialization information sent by the PCN through the RAN and the IP address assigned by the PCN when the AT serves as a participant AT.

13. The AT according to claim 12, further comprising:
an audio and video acquisition module (44) configured to acquire the audio and/or video data of the AT, and send the audio and/or video flow to the PCN under the calling of the information processing module; and
a data storage module (45) configured to send the stored data of the AT to the PCN through a RAN under the calling of the information processing module, or store the data flow, distributed by the PCN, received by the information processing module.

## Patentansprüche

1. Verfahren zur Implementierung einer drahtlosen Video-Konferenz, umfassend Einleiten (201) durch einen initiierenden drahtlosen Access Terminal AT, eine Konferenz-Anfrage an ein Packet Core Netzwerk PCN; Durchführen durch das PCN eine Kanferanz-Einiadtrng gemäß einer Konferenz-Einladungs-Liste, die in der Konferenz-Anfrage enthalten ist, Errichten eines Radio-Senders und Betriebsbeginn für jedes AT, der an der drahtlosen Video-Konferenz teilnimmt sowie Versenden von Informationen der Konferenz-Teilnehmer, die an der drahtlosen Video-Konferenz teilnehmen, an den AT zwecks Speicherung, um die Errichtung eines drahtlosen Video-Konferenz-Systems zu vervollständigen; Empfangen (202) eines Signalflusses des AT in dem drahtlosen Video-Konferenz-System durch das PCN, nachdem das drahtlose Video-Konferenz-System erfolgreich etabliert worden ist, und Übermitteln des Signalflusses an den einleitenden AT; und Senden (203) eines Steuerbefehls an das PCN durch den Einleitungs -AT, gemäß einer Signalgebung in dem Signalfluß, um das PCN dahingehend zu steuern, daß ein Informationsfluß in dem drahtlosen Video-Konferenz-System verteilt wird, **dadurch gekennzeichnet, daß** der Schritt des Errichtens des Radio-Senders und die Durchführung der Initiierung jedes AT, der an der drahtlosen Video-Konferenz teilnimmt, folgendes umfaßt: Errichten des Radio-Senders für den Einleitungs -AT durch das PCN, nachdem das PCN die Konferenz-Anfrage empfängt, und zuverlässig betätigt und den Einleitungs -AT erfolgreich autorisiert, Versenden des Protokolls Punkt für Punkt PPP, Abgeben der Information an den Einleitungs -AT und Unterzeichnen eines Internet-Protokolls IP, Adressieren an den Einleitungs -AT und Errichten eines Radio-Senders durch das PCN für einen Teilnahme -AT, nachdem das PCN einen Konferenz-Teilnahme-Befehl erhält, der von dem Teilnahme -AT zurückgegeben wird, sowie Senden der PPP Einleitungs-Information an den Teilnahme -AT und Abzeichnen einer IP Adresse für den Teilnahme -AT.

2. Verfahren nach Anspruch 1, **dadurch gekennzeichnet, daß** die Konferenz-Anfrage folgendes umfaßt: eine Konferenz-Einladungsliste, eine hohe Prioritätsbefugnis der Einladungs -AT und die dem AT übertragene Befugnis in der Konferenz-Einladungsliste.

3. Verfahren nach Anspruch 1, **dadurch gekennzeichnet, daß** die Konferenz-Teilnehmer-Information folgendes aufweist: eine Konferenz-Teilnehmerliste, eine hohe Prioritätsbefugnis des Einleitungs -AT, eine Befugnis des Teilnehmer -AT, die an der Video- Konferenz teilnehmen, und IP Adressen der ATs.

4. Verfahren nach Anspruch 1, **dadurch gekennzeichnet, daß** der Schritt des Empfangens des Signalflusses des AT in dem drahtlosen Video- Konferenz-System durch das PCN folgendes umfaßt: Empfangen des Signalflusses des Teilnehmer -AT durch das PCN sowie des Einleitungs -AT durch einen Radio-Sendernetz RAN; wobei der Signalfluß folgendes aufweist: einen Präsentationsanfrage-Befehl, einen Videoanfrage-Befehl sowie einen Datenteilungs-Aufforderungs-Befehl.

5. Verfahren nach Anspruch 1, **dadurch gekennzeichnet, daß** der Schritt des Sendens des Steuerbefehls an das PCN durch den Einleitungs -AT gemäß der Signalgebung in dem empfangenen Signalfluß folgendes umfaßt: Empfangen des Signalflusses von dem PCN durch den Einleitungs -AT, Durchführen von Analysen zur Bearbeitung der Signalgebung in dem Signalfluß und Senden des Steuerbefehls an das PCN gemäß einem Ergebnis der Analysebearbeitung.

6. Verfahren nach Anspruch 1, **dadurch gekennzeichnet, daß** der Schritt des Steuerns des PCN zur Verteilung des Informationsflusses in dem drahtlosen Video- Konferenzsystem folgendes umfaßt: Empfangen und Verteilen eines Audio- und / oder Videoflusses des AT, der die Präsentationsaufforderung sendet, gemäß einem Präsentationszulassungs-Befehl des Einleitungs -AT durch das PCN, und / oder Verteilen eines Datenflusses gemäß dem Datenteilungs-Befehl des Einleitungs -AT durch das PCN; und / oder Verteilen eines Videoflusses gemäß eines Video-Verteilungs-Befehls des Einleitungs -AT durch das PCN; und / oder Freigeben aller UM -Interface - Radioquellen gemäß einem Konferenz-Beendigungs-Befehl des Einleitungs -AT durch das PCN.

7. System zur Implementierung einer drahtlosen Video- Konferenz, umfassend einen Einleitungs -AT (31), der so gestaltet ist, daß eine Konferenz-Anfrage initiiert, gesendet und ein Signalfluß sowie ein Informationsfluß empfangen wird, ferner Durchführung einer Analyse zur Bearbeitung einer Signalgebung in dem empfangenen Signalfluß, und Senden eines Steuerkommandos zur Steuerung eines PCN zwecks Verteilung eines Informationsflusses in dem drahtlosen Video- Konferenz -System; ferner umfassend einen teilnehmenden AT (32), der so gebaut ist, daß die drahtlose Video-Konferenz empfangen wird, sowie der Signalfluß gesendet und empfangen wird und dieser Informationsfluß bearbeitet wird; des weiteren umfassend ein PCN (34), das so gestaltet ist, daß die Konferenz-Einladung gemäß einer Konferenz-Einladungsliste bewirkt wird, die in der Konferenz-Anfrage enthalten ist, daß des weiteren für jedes AT, das zu der drahtlosen Video-Konferenz gehört, ein Radiosender errichtet wird und einleitende Schritte stattfinden, wobei des weiteren ein Informationsfluß für jeden AT empfangen und gesendet wird und der Informationsfluß gemäß dem Steuerbefehl des Einleitungs -AT verteilt wird, **dadurch gekennzeichnet, daß** das PCN des weiteren so gestaltet ist, daß der Radiosender für den Einleitungs -AT errichtet wird, nachdem das PCN die Konferenzanfrage erhält und den Einleitungs -AT erfolgreich betätigt und autorisiert; daß ein Punkt zu Punkt -Protokoll PPP mit einleitenden Informationen an den Einleitungs -AT gesendet wird, und daß ein Internet-Protokoll IP unterschrieben und an den Einleitungs -AT adressiert wird, und daß ein Radiosender für den teilnehmenden AT errichtet wird, nachdem das PCN einen Konferenz-Teilnahme-Befehl erhält und durch den Teilnahme -AT zurückgesendet wird, woraufhin die PPP -Einleitungs-Information an den teilnehmenden AT gesendet und eine IP -Adresse für den teilnehmenden AT ausgegeben wurde.

8. System nach Anspruch 7, ferner umfassend ein Radio Access Netzwerk RAN, das so gestaltet ist, daß der Signalfluß und der Informationsfluß in dem System übertragen wird.

9. System nach Anspruch 8, **dadurch gekennzeichnet, daß** der Einleitungs -AT folgendes aufweist: einen ersten Informations-Bearbeitungs-Modul (311), der so gestaltet ist, daß der Signalfluß und der Informationsfluß durch das RAN gesendet und empfangen wird; einen Terminal-Steuerungs-Modul (312), der so gestaltet ist, daß der Signalfluß und der Informationsfluß, der durch das RAN empfangen wird, bearbeitet wird und ein Steuerbefehl zur Steuerung des PCN ausgesandt wird, um den Informationsfluß durch das RAN zu verteilen: einen ersten Audio- und Video-Modul (313), der so gestaltet ist, daß der Audio- und / oder Videofluß umgewandelt wird, und zwar verteilt durch das PCN, empfangen durch den ersten Informations-Bearbeitungs-Modul als Sprache und / oder Video; einen ersten Audio- und Video-Aquisitions-Modul (314), der so gestaltet ist, daß er Audio- und / oder Video-Daten der Einleitungs -AT sammelt und einen Audio- und / oder Video-Fluß an das PCN sendet, und zwar unter Benennung des ersten Informations-Verarbeitungs-Moduls; und einen ersten Datenspeicher-Modul (315), der so gestaltet ist, daß er gespeicherte Daten des Einleitungs -AT an das PCN sendet, und zwar durch das RN unter der Anrufung des ersten Informations-Verarbeitungs-Moduls oder Speicherung des Datenflusses, der von dem PCN verteilt wird und von dem ersten Informations-Bearbeitungs-Modul empfangen wird.

10. System nach Anspruch 9, **dadurch gekennzeichnet, daß** der teilnehmende AT folgendes aufweist: einen zweiten Informations-Bearbeitungs-Modul (321), der so gestaltet ist, daß er den Signalfluß und den Informationsfluß durch das RAN sendet und empfängt; und einen zweiten Audio- und Video-Modul (322), der so gestaltet ist, daß er den Audio- und / oder Videofluß, der durch das PCN verteilt wird, empfangen durch den zweiten Informations-Verarbeitungs-Modul, in Sprache und / oder Video umwandelt.

11. System nach Anspruch 9, **dadurch gekennzeichnet, daß** der teilnehmende AT des weiteren folgendes aufweist: einen zweiten Audio- und Video-Aquisitions-Modul (323), der dazu dient, die Audio- und Video-Daten des teilnehmenden AT aufzunehmen und den Audio- und Videofluß an das PCN zu senden, und zwar unter Anrufung des zweiten Informations-Bearbeitungs-Moduls; sowie einen zweiten Datenspeicher-Modul (324), der so gestaltet ist, daß die gespeicherten Daten des teilnehmenden AT an das PCN durch den RAN gesendet werden, wo der Datenfluß gespeichert wird, der von dem PCN verteilt wird, empfangen durch den zweiten Informations-Verarbeitungs-Modul, unter Einbeziehung des zweiten Informations-Bearbeitungs-Moduls.

12. Ein AT, umfassend einen Informations-Bearbeitungs-Modul (41), der so gestaltet ist, daß er einen Signalfluß und einen Informationsfluß sendet und empfängt; ferner einen Terminal-Steuer-Modul (42), der so gestaltet ist, daß er ein Steuersignal zur Steuerung des PCN sendet, um den Informationsfluß zu verteilen und den empfangenen Signalfluß zu bearbeiten sowie den Informationsfluß, wenn der AT als Einleitungs -AT dient: und des weiteren umfassend einen Audio- und Video-Modul (43), der so gestaltet ist, daß er einen Audio- und / oder Videofluß, der von dem PCN verteilt wird, welcher durch den Informations-Bearbeitungs-Modul empfangen wird, in Sprache und / oder Video umwandelt, **dadurch gekennzeichnet, daß** dann, wenn der Informations-Bearbeitungs-Modul des weiteren so gestaltet ist, ein Konferenz-Anfrage-Befehl durch ein RAN an das PCN gesendet wird, wenn das drahtlose Video- Konferenzsystem errichtet wird, und daß eine Punkt zu Punkt (PPP) -Einleitungs-Information empfangen wird, die durch das PCN und die IP -Adresse gesendet wird, welche durch das RAN von dem PCN zugeteilt wird, nachdem sie durch das PCN mit Erfolg als authentisch festgestellt und autorisiert worden ist, sobald das AT als ein Einleitungs -AT dient; und wobei schließlich der Informations-Bearbeitungs-Modul des weiteren so gestaltet ist, daß eine Konferenz-Einladungs-Information durch den RAN empfangen wird und ein Teilnahme- oder Nicht-Teilnahme-Befehl rückgeführt wird, wenn das drahtlose Video- Konferenzsystem errichtet wird; und wobei schließlich die PPP -Einleitungs-Information von dem PCN durch den RAN gesendet wird und die IP Adresse durch das PCN zugewiesen wird, wenn der AT als teilnehmender AT dient.

13. AT nach Anspruch 12, ferner umfassend einen Audio- und Video-Aquisitions-Modul (44), der so gestaltet ist, daß er die Audio- und / oder Videodaten des AT erhält und der Audio- und / oder Videofluß zu dem PCN unter Einbeziehung des Informations-Bearbeitungs-Moduls gesandt wird; und schließlich umfassend einen Datenspeicher-Modul (45), der so gestaltet ist, daß die gespeicherten Daten des AT an das PCN durch ein RAN gesendet werden, und zwar unter Einbeziehung des Informations-Verarbeitungs-Moduls, oder des Datenflusses, der durch das PCN verteilt wird und von dem Informations-Bearbeitungs-Modul empfangen wird.

## Revendications

1. Procédé pour mettre en oeuvre une vidéoconférence sans fil, comprenant :
- l'initiation (201), par un terminal d'accès, AT, sans fil initiateur, d'une requête de conférence sur un réseau central par paquets, PCN ; la réalisation, par le PCN, d'une invitation à la conférence selon une liste d'invitant à la conférence incluse dans la requête de conférence, l'établissement d'une ressource radio et la réalisation d'une initialisation pour chaque AT qui assiste à la vidéoconférence sans fil, et l'envoi d'informations de membres de conférence assistant à la vidéoconférence sans fil à l'AT initiateur pour un stockage pour achever un établissement d'un système de vidéoconférence sans fil ;
- la réception (202) par le PCN, d'un flux de signalisation de l'AT dans le système de vidéoconférence sans fil, après que le système de vidéoconférence sans fil est établi avec succès, et l'envoi du flux de signalisation à l'AT initiateur ; et
- l'envoi (203), par l'AT initiateur, d'une instruction de commande au PCN, selon une signalisation dans le flux de signalisation, pour commander le PCN pour qu'il distribue un flux d'informations dans le système de vidéoconférence sans fil,
**caractérisé par le fait que** l'étape d'établissement de la ressource radio et de réalisation d'une initialisation pour chaque AT qui assiste à la vidéoconférence sans fil comprend :
- l'établissement, par le PCN, de la ressource radio pour l'AT initiateur, après que le PCN a reçu la requête de conférence et authentifié et autorisé l'AT initiateur avec succès, l'envoi d'informations d'initialisation de protocole point à point, PPP, à l'AT initiateur, et l'affectation d'une adresse de protocole Internet, IP, à l'AT initiateur ;
- l'établissement, par le PCN, d'une ressource radio pour un AT participant, après que le PCN a reçu une instruction de participation à la conférence renvoyée par l'AT participant, l'envoi des informations d'initialisation PPP à l'AT participant, et l'affectation d'une adresse IP pour l'AT participant.

2. Procédé selon la revendication 1, dans lequel la requête de conférence comprend : une liste d'invitant à la conférence, une autorité à haute priorité de l'AT initiateur, et l'autorité affectée à l'AT dans la liste d'invitant à la conférence.

3. Procédé selon la revendication 1, dans lequel les informations de membres de conférence comprennent : une liste de membres de conférence, une autorité à haute priorité de l'AT initiateur, une autorité de l'AT participant assistant à la vidéoconférence sans fil, et les adresses IP de tous les AT.

4. Procédé selon la revendication 1, dans lequel l'étape de réception du flux de signalisation de l'AT dans le système de vidéoconférence sans fil par le PCN comprend : la réception, par le PCN, du flux de signalisation de l'AT participant et de l'AT initiateur à travers un réseau d'accès radio, RAN ;
dans lequel le flux de signalisation comprend : une instruction de requête de présentation, une instruction de requête de vidéo et une instruction de requête de partage de données.

5. Procédé selon la revendication 1, dans lequel l'étape d'envoi de l'instruction de commande au PCN par l'AT initiateur selon la signalisation dans le flux de signalisation reçu comprend : la réception, par l'AT initiateur, du flux de signalisation en provenance du PCN, la réalisation d'un traitement d'analyse sur la signalisation dans le flux de signalisation, et l'envoi de l'instruction de commande au PCN selon un résultant du traitement d'analyse.

6. Procédé selon la revendication 1, dans lequel l'étape de commande du PCN pour qu'il distribue le flux d'informations dans le système de vidéoconférence sans fil comprend :
- la réception et la distribution, par le PCN, d'un flux audio et/ou vidéo de l'AT qui envoie la requête de présentation, selon une instruction de permission de présentation de l'AT initiateur ; et/ou,
- la distribution, par le PCN, d'un flux de données selon l'instruction de partage de données de l'AT initiateur ; et /ou,
- la distribution, par le PCN, d'un flux vidéo selon une instruction de distribution de vidéo de l'AT initiateur ; et/ou,
- la libération, par le PCN, de toutes les ressources radio d'interface UM selon une instruction de fin de conférence de l'AT initiateur.

7. Système pour mettre en oeuvre une vidéoconférence sans fil, comprenant :
- un AT initiateur (31) configuré pour initier une requête de conférence, envoyer et recevoir un flux de signalisation et un flux d'informations, réaliser un traitement d'analyse sur une signalisation dans le flux de signalisation reçu, et envoyer une instruction de commande pour commander un PCN pour qu'il distribue un flux d'informations dans le système de vidéoconférence sans fil ;
- un AT participant (32) configuré pour assister à la vidéoconférence sans fil, envoyer et recevoir le flux de signalisation et le flux d'informations, et traiter le flux d'informations ;
- un PCN (34) configuré pour réaliser une invitation à la conférence selon une liste d'invitant à la conférence incluse dans la requête de conférence, établir une ressource radio et réaliser une initialisation pour chaque AT qui assiste à la vidéoconférence sans fil ; et pour recevoir et envoyer un flux d'informations et un flux d'informations de chaque AT, et distribuer le flux d'informations selon l'instruction de commande de l'AT initiateur,
**caractérisé par le fait que** le PCN est en outre configuré pour établir la ressource radio pour l'AT initiateur, après que le PCN a reçu la requête de conférence, et authentifié et autorisé l'AT initiateur avec succès ; envoyer des informations d'initialisation de protocole point à point, PPP, à l'AT initiateur, et affecter une adresse de protocole Internet, IP, à l'AT initiateur ; établir une ressource radio pour un AT participant, après que le PCN a reçu une instruction de participation à la conférence renvoyée par l'AT participant, envoyer les informations d'initialisation PPP à l'AT participant, et affecter une adresse IP pour l'AT participant.

8. Système selon la revendication 7, comprenant en outre :
- un RAN configuré pour transférer le flux de signalisation et le flux d'informations dans le système.

9. Système selon la revendication 8, dans lequel l'AT initiateur comprend :
- un premier module de traitement d'informations (311) configuré pour envoyer et recevoir le flux de signalisation et le flux d'informations à travers le RAN ;
- un module de commande de terminal (312) configuré pour traiter le flux de signalisation et le flux d'informations reçus à travers le RAN, et envoyer une instruction de commande pour commander le PCN pour qu'il distribue le flux d'informations à travers le RAN ;
- un premier module audio et vidéo (313) configuré pour convertir le flux audio et/ou vidéo, distribué par le PCN, reçu par le premier module de traitement d'informations en voix et/ou vidéo ;
- un premier module d'acquisition audio et vidéo (314) configuré pour acquérir des données audio et/ou vidéo de l'AT initiateur et envoyer un flux audio et/ou vidéo au PCN à l'appel du premier module de traitement d'informations ; et
- un premier module de stockage de données (315) configuré pour envoyer des données stockées de l'AT initiateur au PCN à travers le RAN à l'appel du premier module de traitement d'informations, ou stocker le flux de données, distribué par le PCN, reçu par le premier module de traitement d'informations.

10. Système selon la revendication 9, dans lequel l'AT participant comprend :
- un second module de traitement d'informations (321) configuré pour envoyer et recevoir le flux de signalisation et le flux d'informations à travers le RAN ; et
- un second module audio et vidéo (322) configuré pour convertir le flux audio et/ou vidéo, distribué par le PCN, reçu par le second module de traitement d'informations en voix et/ou vidéo.

11. Système selon la revendication 9, dans lequel l'AT participant comprend en outre :
- un second module d'acquisition audio et vidéo (323) configuré pour acquérir les données audio et vidéo de l'AT participant, et envoyer le flux audio et vidéo au PCN à l'appel du second module de traitement d'informations ; et
- un second module de stockage de données (324) configuré pour envoyer les données stockées de l'AT participant au PCN à travers le RAN, ou stocker le flux de données, distribué par le PCN, reçu par le second module de traitement d'informations à l' appel du second module de traitement d'informations.

12. Terminal d'accès, AT, comprenant :
- un module de traitement d'informations (41) configuré pour envoyer et recevoir un flux de signalisation et un flux d'informations ;
- un module de commande de terminal (42) configuré pour envoyer une instruction de commande pour commander le PCN pour qu'il distribue le flux d'informations, et traiter le flux de signalisation reçu et le flux d'informations lorsque l'AT sert d'AT initiateur ; et
- un module audio et vidéo (43) configuré pour convertir un flux audio et/ou vidéo, distribué par le PCN, reçu par le module de traitement d'informations en voix et/ou vidéo,
**caractérisé par le fait que** le module de traitement d'informations est en outre configuré pour envoyer une instruction de requête de conférence au PCN à travers un RAN lorsque le système de vidéoconférence sans fil est établi ; et recevoir des informations d'initialisation de protocole point à point, PPP, envoyées par le PCN et l'adresse IP affectée par le PCN à travers le RAN après avoir été authentifié et autorisé par le PCN avec succès, lorsque l'AT sert d'AT initiateur ; et
le module de traitement d'informations est en outre configuré pour recevoir des informations d'invitation à la conférence à travers le RAN, et renvoyer une instruction de participation ou de non-participation, lorsque le système de vidéoconférence sans fil est établi; et recevoir les informations d'initialisation PPP envoyées par le PCN à travers le RAN et l'adresse IP affectée par le PCN lorsque l'AT sert d'AT participant.

13. AT selon la revendication 12, comprenant en outre :
- un module d'acquisition audio et vidéo (44) configuré pour acquérir les données audio et/ou vidéo de l'AT, et envoyer le flux audio et/ou vidéo au PCN à l' appel du module de traitement d'informations ; et
- un module de stockage de données (45) configuré pour envoyer les données stockées de l'AT au PCN à travers un RAN à l'appel du module de traitement d'informations, ou stocker le flux de données, distribué par le PCN, reçu par le module de traitement d'informations.
